# EUROPEAN PATENT APPLICATION

(11) **EP 4 464 805 A1**
(43) Date of publication of application: **20.11.2024**
(21) Application number: 23784817.1
(22) Date of filing: 07.04.2023
(51) Int. Cl.: C22B 7/00, C01D 15/02, C01D 15/08, C22B 3/06, C22B 3/08, C22B 3/10, C22B 3/22, C22B 3/26, C22B 3/28, C22B 3/30, C22B 3/38, C22B 3/44, C22B 23/00, C22B 26/12, C22B 47/00, C25B 1/02, C25B 1/26, C25B 1/46, H01M 10/54

(54) **METHOD FOR RECOVERING LITHIUM FROM WASTE LITHIUM ION BATTERIES**

(30) Priority: 08.04.2022 JP 2022064722; 08.04.2022 JP 2022064723; 08.04.2022 JP 2022064724; 08.04.2022 JP 2022064725; 08.04.2022 JP 2022064726; 08.04.2022 JP 2022064727; 08.04.2022 JP 2022064728; 08.04.2022 JP 2022064729; 08.04.2022 JP 2022064730; 08.04.2022 JP 2022064731; 08.04.2022 JP 2022064732; 08.04.2022 JP 2022064733
(71) Applicant: Asaka Riken Co., Ltd., Koriyama-shi, Fukushima 963-0725 (JP)
(72) Inventor: YAMADA Keita, Koriyama-shi, Fukushima 963-0725 (JP); SAKUMA Yukio, Koriyama-shi, Fukushima 963-0725 (JP); HIRAOKA Taro, Koriyama-shi, Fukushima 963-0725 (JP)
(74) Representative: Schön, Christoph
(86) International application number: PCT/JP2023/014342
(87) International publication number: WO 2023/195533

(57) **Abstract**

The present invention provides a method for recovering valuable metals from waste lithium ion batteries that can recover lithium at a high recovery rate and enables resource circulation. The method for recovering lithium from waste lithium ion batteries includes: a dissolution step of dissolving active material powder obtained by pre-processing the waste lithium ion batteries in a mineral acid to obtain a solution; a neutralization step of neutralizing the solution with lithium hydroxide; a lithium hydroxide re-addition step of re-adding lithium hydroxide to the acid solution to which lithium hydroxide has been added and filtering precipitates to obtain a first lithium salt aqueous solution as a filtrate; and a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution, and the lithium hydroxide aqueous solution obtained in the membrane electrolysis step is reused in at least one selected from the group consisting of the neutralization step and the lithium hydroxide re-addition step, and the acid obtained in the membrane electrolysis step is reused as the mineral acid used in the dissolution step.

## Description

### Technical Field

The present invention relates to a method for recovering lithium from waste lithium ion batteries.

### Background Art

In recent years, along with the widespread use of lithium ion batteries, methods for recovering valuable metals such as cobalt, nickel, manganese, and lithium from waste lithium ion batteries and reusing them as materials for the lithium ion batteries have been investigated.

Conventionally, when recovering the valuable metals from the waste lithium ion batteries, it has been carried out to separate and refine cobalt, nickel, manganese, and lithium by a wet process from the powder containing the valuable metals (hereinafter, referred to as active material powder) obtained by, for example, crushing and classifying the waste lithium ion batteries with or without heating treatment (roasting) (for example, see Patent Literatures 1 and 2).

Note that, in the present application, waste lithium ion batteries mean used lithium ion batteries that have reached the end of their useful life as battery products, lithium ion batteries discarded as defective products and the like in the production process, and residual positive electrode and negative electrode materials and the like used for productization in the production process.

### Citation List

### Patent Literature

Patent Literature 1: Japanese Patent No. 6835820
Patent Literature 2: Japanese Patent No. 6869444

### Summary of Invention

### Technical Problem

However, in the conventional wet process, a compound other than the lithium compound, which is the recovery target, is used as the alkali source, which increases the concentration of cations other than lithium and simultaneously decreases the concentration of lithium ions. As a result, the conventional wet process has inconveniences that the recovery rate of lithium, the target, is significantly decreased, and that the compound other than the lithium compound used as the alkali source is drained as a salt, making resource circulation impossible. Here, examples of the compound other than the lithium compound may include sodium hydroxide, sodium carbonate, and ammonia.

An object of the present invention is to provide a method for recovering valuable metals from waste lithium ion batteries that can eliminate such inconveniences to recover lithium at a high recovery rate and enable resource circulation.

### Solution to Problem

As a result of investigations in view of the aforementioned problem, the present inventors have found that the aforementioned inconveniences can be solved by dissolving active material powder obtained by pre-processing waste lithium ion batteries in a mineral acid, neutralizing the solution with lithium hydroxide, re-adding lithium hydroxide and filtering precipitates to obtain a first lithium salt aqueous solution as a filtrate.

The present inventors have found that the aforementioned inconveniences can be solved by dissolving the active material powder in a mineral acid, neutralizing the solution with lithium hydroxide, and then, from the solution obtained by solid-liquid separation, extracting manganese, cobalt, and nickel in a specific order using a specific plurality of organic solvents.

The present inventors have found that the aforementioned inconveniences can be solved by dissolving the active material powder in a mineral acid, neutralizing the solution with lithium hydroxide, and then, from the solution obtained by solid-liquid separation, extracting manganese, cobalt, and nickel using specific organic solvents.

The present inventors have found that the aforementioned inconveniences can be solved by dissolving the active material powder in a mineral acid, neutralizing the solution with lithium hydroxide, and then, when extracting manganese, cobalt, and nickel from the solution obtained by solid-liquid separation using organic solvents, mixing an alkali-containing organic solvent obtained by mixing an alkali aqueous solution and the organic solvent, followed by oil-water separation, with the acid solution.

The present inventors have found that the aforementioned inconveniences can be solved by dissolving the active material powder in a mineral acid, neutralizing the solution with lithium hydroxide, and then adding a sulfide and removing a metal sulfide.

The present inventors have found that the aforementioned inconveniences can be solved by carbonating the lithium hydroxide aqueous solution and the lithium salt aqueous solution obtained in the membrane electrolysis step.

The present inventors have found that the aforementioned inconveniences can be solved by dissolving the active material powder in a mineral acid, neutralizing the solution with lithium hydroxide, then, from the solution obtained by solid-liquid separation, extracting manganese, cobalt, and nickel using organic solvents to obtain a lithium salt aqueous solution, and thereafter mixing the lithium salt aqueous solution and an alkali to remove nickel contained in the lithium salt aqueous solution.

The present invention has reached completion based on these findings.

The present invention relates to a method for recovering lithium from waste lithium ion batteries, the method comprising: a dissolution step of dissolving active material powder obtained by pre-processing the waste lithium ion batteries in a mineral acid to obtain a solution; a neutralization step of neutralizing the solution with lithium hydroxide; a lithium hydroxide re-addition step of re-adding lithium hydroxide to the acid solution to which lithium hydroxide has been added and filtering precipitates to obtain a first lithium salt aqueous solution as a filtrate; and a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution, wherein the lithium hydroxide aqueous solution obtained in the membrane electrolysis step is reused in at least one selected from the group consisting of the neutralization step and the lithium hydroxide re-addition step, and the acid obtained in the membrane electrolysis step is reused as the mineral acid used in the dissolution step (hereinafter, this method may be referred to as "lithium recovery method 1 of the present invention").

The present invention relates to a method for recovering lithium from waste lithium ion batteries, the method comprising: a dissolution step of dissolving active material powder obtained by pre-processing the waste lithium ion batteries in a mineral acid to obtain a solution; a neutralization and solid-liquid separation step of solid-liquid separating the solution into insoluble matters and a solution A produced by neutralization with lithium hydroxide; a manganese extraction step of adding an organophosphorus compound extraction solvent to the solution A to extract and separate manganese and also to obtain a solution B; a cobalt extraction step of adding an organophosphorus compound extraction solvent to the solution B to extract and separate cobalt and also to obtain a solution C; a nickel extraction step of adding an organophosphorus compound extraction solvent to the solution C to extract and separate nickel and also to obtain a first lithium salt aqueous solution; and a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution, wherein the lithium hydroxide aqueous solution obtained in the membrane electrolysis step is reused in at least one selected from the group consisting of the neutralization and solid-liquid separation step, the manganese extraction step, the cobalt extraction step, and the nickel extraction step, and the acid obtained in the membrane electrolysis step is reused as the mineral acid used in the dissolution step (hereinafter, this method may be referred to as "lithium recovery method 2 of the present invention").

The present invention relates to a method for recovering lithium from waste lithium ion batteries, the method comprising: a dissolution step of dissolving active material powder obtained by pre-processing the waste lithium ion batteries in a mineral acid to obtain a solution; a neutralization and solid-liquid separation step of solid-liquid separating the solution into insoluble matters and a solution A produced by neutralization with lithium hydroxide; a manganese extraction step of adding an organophosphorus compound extraction solvent to the solution A to extract and separate manganese and also to obtain a solution D; a nickel extraction step of adding a hydroxime extraction solvent to the solution D to extract and separate nickel and also to obtain a solution E; a cobalt extraction step of adding an organophosphorus compound extraction solvent to the solution E to extract and separate cobalt and also to obtain a first lithium salt aqueous solution; and a membrane electrolysis step of subjecting the first lithium salt aqueous solution to electrolysis using an ion exchange membrane to obtain a lithium hydroxide aqueous solution, an acid, and a second lithium salt aqueous solution that is more dilute than the first lithium salt aqueous solution, wherein the lithium hydroxide aqueous solution obtained in the membrane electrolysis step is reused in at least one selected from the group consisting of the neutralization and solid-liquid separation step, the manganese extraction step, the nickel extraction step, and the cobalt extraction step, and the acid obtained in the membrane electrolysis step is reused as the mineral acid used in the dissolution step (hereinafter, this method may be referred to as "lithium recovery method 3 of the present invention").

The present invention relates to a method for recovering lithium from waste lithium ion batteries, the method comprising: a dissolution step of dissolving active material powder obtained by pre-processing the waste lithium ion batteries in a mineral acid to obtain a solution; a neutralization and solid-liquid separation step of solid-liquid separating the solution into insoluble matters and a solution A produced by neutralization with lithium hydroxide; a cobalt extraction step of adding an organic amine compound extraction solvent to the solution A to extract and separate cobalt and also to obtain a solution F; a manganese extraction step of adding an organophosphorus compound extraction solvent to the solution F to extract and separate manganese and also to obtain a solution G; a nickel extraction step of adding an organophosphorus compound extraction solvent to the solution G to extract and separate nickel and also to obtain a first lithium salt aqueous solution; and a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution, wherein the lithium hydroxide aqueous solution obtained in the membrane electrolysis step is reused in at least one selected from the group consisting of the neutralization and solid-liquid separation step, the cobalt extraction step, the manganese extraction step, and the nickel extraction step, and the acid obtained in the membrane electrolysis step is reused as the mineral acid used in the dissolution step (hereinafter, this method may be referred to as "lithium recovery method 4 of the present invention").

The present invention relates to a method for recovering lithium from waste lithium ion batteries, the method comprising: a dissolution step of dissolving active material powder obtained by pre-processing the waste lithium ion batteries in a mineral acid to obtain a solution; a neutralization and solid-liquid separation step of solid-liquid separating the solution into insoluble matters and a solution A produced by neutralization with lithium hydroxide; a cobalt extraction step of adding an organic amine compound extraction solvent to the solution A to extract and separate cobalt and also to obtain a solution H; a nickel extraction step of adding a hydroxime extraction solvent to the solution H to extract and separate nickel and also to obtain a solution I; a manganese extraction step of adding an organophosphorus compound extraction solvent to the solution I to extract and separate manganese and also to obtain a first lithium salt aqueous solution; and a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution, wherein the lithium hydroxide aqueous solution obtained in the membrane electrolysis step is reused in at least one selected from the group consisting of the neutralization and solid-liquid separation step, the cobalt extraction step, the nickel extraction step, and the manganese extraction step, and the acid obtained in the membrane electrolysis step is reused as the mineral acid used in the dissolution step (hereinafter, this method may be referred to as "lithium recovery method 5 of the present invention").

The present invention relates to a method for recovering lithium from waste lithium ion batteries, the method comprising: a dissolution step of dissolving active material powder obtained by pre-processing the waste lithium ion batteries in a mineral acid to obtain a solution; a neutralization and solid-liquid separation step of solid-liquid separating the solution into insoluble matters and a solution A produced by neutralization with lithium hydroxide; a nickel extraction step of adding a hydroxime extraction solvent to the solution A to extract and separate nickel and also to obtain a solution J; a manganese extraction step of adding an organophosphorus compound extraction solvent to the solution J to extract and separate manganese and also to obtain a solution K; a cobalt extraction step of adding an organophosphorus compound extraction solvent to the solution K to extract and separate cobalt and also to obtain a first lithium salt aqueous solution; and a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution, wherein the lithium hydroxide aqueous solution obtained in the membrane electrolysis step is reused in at least one selected from the group consisting of the neutralization and solid-liquid separation step, the nickel extraction step, the manganese extraction step, and the cobalt extraction step, and the acid obtained in the membrane electrolysis step is reused as the mineral acid used in the dissolution step (hereinafter, this method may be referred to as "lithium recovery method 6 of the present invention").

The present invention relates to a method for recovering lithium from waste lithium ion batteries, the method comprising: a dissolution step of dissolving active material powder obtained by pre-processing the waste lithium ion batteries in a mineral acid to obtain a solution; a neutralization and solid-liquid separation step of solid-liquid separating the solution into insoluble matters and a solution A produced by neutralization with lithium hydroxide; a nickel extraction step of adding a hydroxime extraction solvent to the solution A to extract and separate nickel and also to obtain a solution L; a cobalt extraction step of adding an organic amine compound extraction solvent to the solution L to extract and separate cobalt and also to obtain a solution M; a manganese extraction step of adding an organophosphorus compound extraction solvent to the solution M to extract and separate manganese and also to obtain a first lithium salt aqueous solution; and a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution, wherein the lithium hydroxide aqueous solution obtained in the membrane electrolysis step is reused in at least one selected from the group consisting of the neutralization and solid-liquid separation step, the nickel extraction step, the cobalt extraction step, and the manganese extraction step, and the acid obtained in the membrane electrolysis step is reused as the mineral acid used in the dissolution step (hereinafter, this method may be referred to as "lithium recovery method 7 of the present invention").

The present invention relates to a method for recovering lithium from waste lithium ion batteries, the method comprising: a dissolution step of dissolving active material powder obtained by pre-processing the waste lithium ion batteries in a mineral acid to obtain a solution; a neutralization step of neutralizing the solution with lithium hydroxide; a solvent extraction step of separating at least one metal excluding lithium, out of metals contained in the active material powder, from the acid solution to which lithium hydroxide has been added by organic solvent extraction to obtain a first lithium salt aqueous solution as a residual liquid of the solvent extraction; and a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution, wherein the lithium hydroxide aqueous solution obtained in the membrane electrolysis step is reused in at least one selected from the group consisting of the neutralization step and the solvent extraction step, the acid obtained in the membrane electrolysis step is reused as the mineral acid used in the dissolution step, and the organic solvent is at least one selected from the group consisting of an organophosphorus compound, a hydroxime, and an organic amine compound (hereinafter, this method may be referred to as "lithium recovery method 8 of the present invention").

The present invention relates to a method for recovering lithium from waste lithium ion batteries, the method comprising: a dissolution step of dissolving active material powder obtained by pre-processing the waste lithium ion batteries in a mineral acid to obtain a solution; a neutralization step of neutralizing the solution with lithium hydroxide; a solvent extraction step of separating at least one metal excluding lithium, out of metals contained in the active material powder, from the acid solution to which lithium hydroxide has been added by solvent extraction to obtain a first lithium salt aqueous solution as a residual liquid of the solvent extraction; and a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution, wherein the lithium hydroxide aqueous solution obtained in the membrane electrolysis step is reused in at least one selected from the group consisting of the neutralization step and the solvent extraction step, the acid obtained in the membrane electrolysis step is reused as the mineral acid used in the dissolution step, and in the solvent extraction step, an alkali-containing organic solvent obtained by mixing an alkali aqueous solution and the organic solvent, followed by oil-water separation, is mixed with the acid solution (hereinafter, this method may be referred to as "lithium recovery method 9 of the present invention").

The present invention relates to a method for recovering lithium from waste lithium ion batteries, the method comprising: a dissolution step of dissolving active material powder obtained by pre-processing the waste lithium ion batteries in a mineral acid to obtain a solution; a neutralization step of neutralizing the solution with lithium hydroxide; a metal sulfide removal step of mixing the acid solution to which lithium hydroxide has been added with a sulfide in a pH range of 2 to 6 to produce a sulfide of at least one metal selected from the group consisting of copper, cadmium, lead, and mercury, and removing the metal sulfide; a solvent extraction step of separating at least one metal excluding lithium, out of metals contained in the active material powder, from the acid solution from which the metal sulfide has been removed by solvent extraction to obtain a first lithium salt aqueous solution as a residual liquid of the solvent extraction; and a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution, wherein the lithium hydroxide aqueous solution obtained in the membrane electrolysis step is reused in at least one selected from the group consisting of the neutralization step and the solvent extraction step, and the acid obtained in the membrane electrolysis step is reused as the mineral acid used in the dissolution step (hereinafter, this method may be referred to as "lithium recovery method 10 of the present invention").

The present invention relates to a method for recovering lithium from waste lithium ion batteries, the method comprising: a dissolution step of dissolving active material powder obtained by pre-processing the waste lithium ion batteries in a mineral acid to obtain a solution; a neutralization step of neutralizing the solution with lithium hydroxide; a solvent extraction step of separating at least one metal excluding lithium, out of metals contained in the active material powder, from the acid solution to which lithium hydroxide has been added by solvent extraction to obtain a first lithium salt aqueous solution as a residual liquid of the solvent extraction; a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution; and a carbonation step of carbonating the lithium hydroxide aqueous solution and the second lithium salt aqueous solution, wherein the lithium hydroxide aqueous solution obtained in the membrane electrolysis step is reused in at least one selected from the group consisting of the neutralization step and the solvent extraction step, and the acid obtained in the membrane electrolysis step is reused as the mineral acid used in the dissolution step (hereinafter, this method may be referred to as "lithium recovery method 11 of the present invention").

The present invention relates to a method for recovering lithium from waste lithium ion batteries, the method comprising: a dissolution step of dissolving active material powder obtained by pre-processing the waste lithium ion batteries in a mineral acid to obtain a solution; a neutralization step of neutralizing the solution with lithium hydroxide; a solvent extraction step of separating at least one metal excluding lithium, out of metals contained in the active material powder, from the acid solution to which lithium hydroxide has been added by solvent extraction to obtain a first lithium salt aqueous solution as a residual liquid of the solvent extraction; a nickel removal step of mixing the first lithium salt aqueous solution and an alkali to remove nickel contained in the first lithium salt aqueous solution and to obtain a second lithium salt aqueous solution; and a membrane electrolysis step of subjecting the second lithium salt aqueous solution to membrane electrolysis using an ion exchange membrane to obtain a lithium hydroxide aqueous solution, an acid, and a third lithium salt aqueous solution that is more dilute than the second lithium salt aqueous solution, wherein the lithium hydroxide aqueous solution obtained in the membrane electrolysis step is reused in at least one selected from the group consisting of the neutralization step and the solvent extraction step, and the acid obtained in the membrane electrolysis step is reused as the mineral acid used in the dissolution step (hereinafter, this method may be referred to as "lithium recovery method 12 of the present invention").

The second lithium salt aqueous solution or the third lithium salt aqueous solution is preferably concentrated and added to the first lithium salt aqueous solution or the second lithium salt aqueous solution.

The mineral acid preferably includes at least one selected from the group consisting of hydrochloric acid, sulfuric acid, and nitric acid, and more preferably includes hydrochloric acid.

Hydrochloric acid produced by allowing chlorine and hydrogen obtained in the membrane electrolysis step to react with each other is preferably used as the mineral acid.

Electric power used for the membrane electrolysis step preferably includes electric power obtained by renewable energy, and more preferably includes electric power obtained by at least one selected from the group consisting of solar power generation and wind power generation.

### Brief Description of Drawings

FIG. 1 is an explanatory drawing showing the configuration of one embodiment of the lithium recovery method 1 of the present invention.
FIG. 2 is an explanatory drawing showing the configuration of one embodiment of the lithium recovery methods 2 to 9 of the present invention.
FIG. 3 is an explanatory drawing showing the configuration of one embodiment of the lithium recovery method 10 of the present invention.
FIG. 4 is an explanatory drawing showing the configuration of one embodiment of the lithium recovery method 11 of the present invention.
FIG. 5 is an explanatory drawing showing the configuration of one embodiment of the lithium recovery method 12 of the present invention.
FIG. 6 is an explanatory cross-sectional view showing the structure of the ion exchange membrane electrolytic bath used in the methods 1 to 12 for recovering lithium from waste lithium ion batteries of the present invention.

### Description of Embodiments

The present invention will be described in further detail.

Note that the numerical range "X to Y" represents X or more and Y or less unless otherwise noted, and includes the numerical values at both ends. Also, when numerical ranges are given, the upper limit and lower limit values can be combined as appropriate, and the resulting numerical ranges shall also be considered as disclosed.

Furthermore, in the description of drawings, identical elements are marked with the same reference signs, and redundant descriptions are omitted. In addition, the dimensional ratios in drawings are exaggerated for the sake of convenience of description and may differ from the actual ratios.

With reference to the accompanying drawings, the respective embodiments 1 to 12 of the present invention 1 to 12 will be described in further detail.

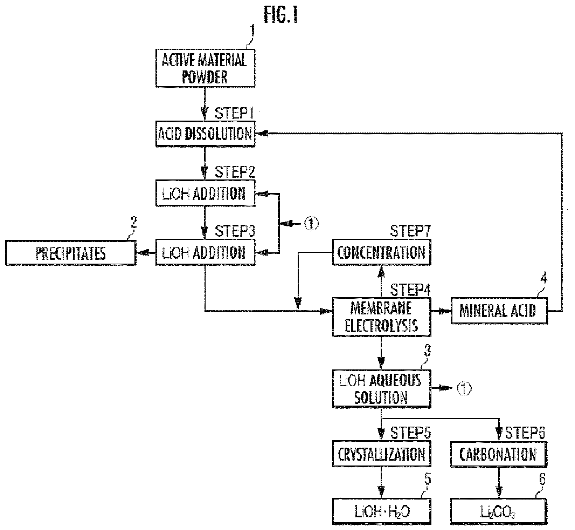

As shown in each of FIGs. 1 to 5, in the respective lithium recovery methods of the present embodiments 1 to 12, active material powder 1 is used as the starting material.

In the present embodiments 1 to 12, next, the active material powder 1 is dissolved in a mineral acid in STEP 1 to obtain an acid solution of the active material powder 1 containing at least lithium. The mineral acid preferably includes at least one selected from the group consisting of hydrochloric acid, sulfuric acid, and nitric acid, more preferably includes hydrochloric acid, and is still more preferably hydrochloric acid. The active material powder 1 contains valuable metals such as iron, aluminum, manganese, cobalt, and nickel, in addition to lithium.

In the lithium recovery method 1 of the present invention (FIG. 1), for the acid solution, next, lithium hydroxide (LiOH) is added in STEP 2, thereby neutralizing the mineral acid. For the acid solution after the neutralization, next, lithium hydroxide is re-added in STEP 3. At least one selected from the group consisting of the valuable metals in the acid solution, such as manganese, cobalt, and nickel, is removed as precipitates 2, and a first lithium salt aqueous solution can be obtained as a filtrate. In the case where two or more metals are contained in the acid solution as valuable metals, the precipitates 2 may be a mixture of the respective hydroxides of the two or more metals, or may be a hydroxide of a mixture of the two or more metals. In the case where hydrochloric acid is used for the acid dissolution in STEP 1, the lithium salt contained in the first lithium salt aqueous solution is lithium chloride.

In the case where each of the valuable metals is neutralized and recovered as a hydroxide, sodium hydroxide, sodium carbonate, ammonia, or the like is used as an alkali source, and in the present invention 1, lithium hydroxide is used as the alkali source, which can increase the lithium recovery rate.

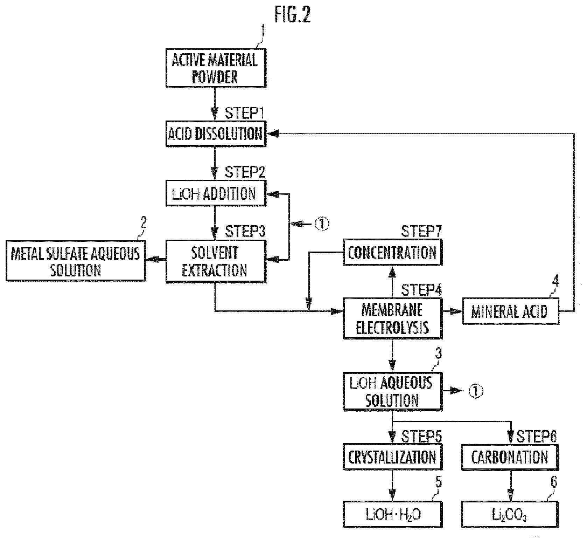

In the lithium recovery methods 2 to 7 of the present invention (FIG. 2), for the acid solution, next, lithium hydroxide (LiOH) is added in STEP 2, thereby neutralizing the mineral acid.

In the lithium recovery method 2 of the present invention (FIG. 2), the acid solution is solid-liquid separated into insoluble matters and a solution A produced by neutralization with lithium hydroxide. An organophosphorus compound extraction solvent is added to the solution A to extract and separate manganese and also to obtain a solution B (manganese extraction step). An organophosphorus compound extraction solvent is added to the solution B to extract and separate cobalt and also to obtain a solution C (cobalt extraction step). An organophosphorus compound extraction solvent is added to the solution C to extract and separate nickel and also to obtain a first lithium salt aqueous solution (nickel extraction step). The separation factors in these extraction steps are high, that is, the separability of each of the aforementioned metals is good in these extraction steps. Furthermore, these extraction steps can be easily controlled by pH.

The solvents used in the manganese extraction step, the cobalt extraction step, and the nickel extraction step are organophosphorus compounds such as phosphate esters, phosphonate esters, phosphinic acid, and phosphine oxides. These organophosphorus compounds are commercially available, and examples of acidic phosphate esters include D2EHPA (di(2-ethylhexyl) phosphate), examples of phosphonate esters include PC-88A manufactured by Daihachi Chemical Industry Co., Ltd., examples of phosphinic acid include CYANEX 272 manufactured by Solvay S.A., examples of neutral phosphate esters include TBP (tributyl phosphate), and examples of phosphine oxides include tri-n-octylphosphine (TOPO).

For example, D2EHPA is used in the manganese extraction step, and CYANEX 272 is used in the cobalt extraction step and the nickel extraction step as the extraction solvent. The pH of CYANEX 272 used in the cobalt extraction step and that in the nickel extraction step are different.

In the lithium recovery method 3 of the present invention (FIG. 2), the acid solution to which lithium hydroxide has been added is solid-liquid separated into insoluble matters and a solution A. An organophosphorus compound extraction solvent is added to the solution A to extract and separate manganese and also to obtain a solution D. A hydroxime extraction solvent is added to the solution D to extract and separate nickel and also to obtain a solution E. An organophosphorus compound extraction solvent is added to the solution E to extract and separate cobalt and also to obtain a first lithium salt aqueous solution.

In the lithium recovery method 4 of the present invention (FIG. 2), the acid solution to which lithium hydroxide has been added is solid-liquid separated into insoluble matters and a solution A. An organic amine compound extraction solvent is added to the solution A to extract and separate cobalt and also to obtain a solution F. An organophosphorus compound extraction solvent is added to the solution F to extract and separate manganese and also to obtain a solution G. An organophosphorus compound extraction solvent is added to the solution G to extract and separate nickel and also to obtain a first lithium salt aqueous solution.

In the lithium recovery method 5 of the present invention (FIG. 2), the acid solution to which lithium hydroxide has been added is solid-liquid separated into insoluble matters and a solution A. An organic amine compound extraction solvent is added to the solution A to extract and separate cobalt and also to obtain a solution H. A hydroxime extraction solvent is added to the solution H to extract and separate nickel and also to obtain a solution I. An organophosphorus compound extraction solvent is added to the solution I to extract and separate manganese and also to obtain a first lithium salt aqueous solution.

In the lithium recovery method 6 of the present invention (FIG. 2), the acid solution to which lithium hydroxide has been added is solid-liquid separated into insoluble matters and a solution A. A hydroxime extraction solvent is added to the solution A to extract and separate nickel and also to obtain a solution J (nickel extraction step). An organophosphorus compound extraction solvent is added to the solution J to extract and separate manganese and also to obtain a solution K (manganese extraction step). An organophosphorus compound extraction solvent is added to the solution K to extract and separate cobalt and also to obtain a first lithium salt aqueous solution (cobalt extraction step).

The solvent used in the nickel extraction step is a hydroxime. Examples of the hydroxime include 7-hydroxy-5,8-diethyl-6-dodecanone oxime (LIX-63), 5-dodecyl-2-hydroxybenzaldehyde oxime (LIX 860), 2-hydroxy-5-nonylbenzophenone oxime (LIX 65N), 2-hydroxy-5-nonylacetophenone oxime (SME 529), and 2-hydroxy-5-nonylphenyl benzyl ketone oxime (Acorga P-17). The solvents used in the manganese extraction step and the cobalt extraction step are organophosphorus compounds such as phosphate esters, phosphonate esters, phosphinic acid, and phosphine oxides. These organophosphorus compounds are commercially available, and examples of acidic phosphate esters include D2EHPA (di(2-ethylhexyl) phosphate), examples of phosphonate esters include PC-88A manufactured by Daihachi Chemical Industry Co., Ltd., examples of phosphinic acid include CYANEX 272 manufactured by Solvay S.A., examples of neutral phosphate esters include TBP (tributyl phosphate), and examples of phosphine oxides include tri-n-octylphosphine (TOPO).

For example, LIX 860 is used in the nickel extraction step, D2EHPA is used in the manganese extraction step, and CYANEX 272 is used in the cobalt extraction step as the extraction solvent.

In the lithium recovery method 7 of the present invention (FIG. 2), the acid solution to which lithium hydroxide has been added is solid-liquid separated into insoluble matters and a solution A. A hydroxime extraction solvent is added to the solution A to extract and separate nickel and also to obtain a solution L (nickel extraction step). An organic amine extraction solvent is added to the solution L to extract and separate cobalt and also to obtain a solution M (cobalt extraction step). An organophosphorus compound extraction solvent is added to the solution M to extract and separate manganese and also to obtain a first lithium salt aqueous solution (manganese extraction step).

The solvent used in the nickel extraction step is a hydroxime. Examples of the hydroxime include 7-hydroxy-5,8-diethyl-6-dodecanone oxime (LIX-63), 5-dodecyl-2-hydroxybenzaldehyde oxime (LIX 860), 2-hydroxy-5-nonylbenzophenone oxime (LIX 65N), 2-hydroxy-5-nonylacetophenone oxime (SME 529), and 2-hydroxy-5-nonylphenyl benzyl ketone oxime (Acorga P-17). The solvent used in the cobalt extraction step is an organic amine compound. Examples of the organic amine compound include Primene (R) JM-T manufactured by The Dow Chemical Company, which is a primary amine, Amberlite (R) LA-2 manufactured by Sigma-Aldrich Co. LLC, which is a secondary amine, Alamine 336 (trioctylamine) manufactured by Sigma-Aldrich Co. LLC, which is a tertiary amine, and Aliquat (R) 336 manufactured by Sigma-Aldrich Co. LLC, which is a quaternary ammonium salt. The solvent used in the manganese extraction step is an organophosphorus compound such as phosphate ester, phosphonate ester, phosphinic acid, and phosphine oxide. These organophosphorus compounds are commercially available, and examples of acidic phosphate esters include D2EHPA (di(2-ethylhexyl) phosphate), examples of phosphonate esters include PC-88A manufactured by Daihachi Chemical Industry Co., Ltd., examples of phosphinic acid include CYANEX 272 manufactured by Solvay S.A., examples of neutral phosphate esters include TBP (tributyl phosphate), and examples of phosphine oxides include tri-n-octylphosphine (TOPO).

For example, LIX 860 is used in the nickel extraction step, trioctylamine is used in the cobalt extraction step, and CYANEX 272 is used in the manganese extraction step as the extraction solvent.

In the lithium recovery method 8 of the present invention (FIG. 2), for the acid solution, next, lithium hydroxide (LiOH) is added in STEP 2, thereby neutralizing the mineral acid. The acid solution after the neutralization is next subjected to organic solvent extraction in STEP 3. In the organic solvent extraction, manganese, cobalt, and nickel, excluding lithium, out of the valuable metals, are separately organic solvent extracted, or iron and aluminum are separated and removed as their respective metal sulfate aqueous solutions 2, thereby obtaining a first lithium salt aqueous solution. In the case where hydrochloric acid is used for the acid dissolution in STEP 1, the lithium salt contained in the first lithium salt aqueous solution is lithium chloride. The organic solvent is at least one selected from the group consisting of an organophosphorus compound such as phosphate ester, phosphonate ester, phosphinic acid, and phosphine oxide, a hydroxime, and an organic amine compound. The organic solvent is preferably free from a reducing agent and an oxidizing agent.

In the case where the organic solvent is free from an oxidizing agent, metals contained in the acid solution after the neutralization, especially manganese, are precipitated and do not cause piping clogging. Furthermore, there is no problem of deterioration of the organic solvent by the oxidizing agent.

The organophosphorus compound is commercially available, and examples of acidic phosphate esters include D2EHPA (di(2-ethylhexyl) phosphate), examples of phosphonate esters include PC-88A manufactured by Daihachi Chemical Industry Co., Ltd., examples of phosphinic acid include CYANEX 272 manufactured by Solvay S.A., examples of neutral phosphate esters include TBP (tributyl phosphate), and examples of phosphine oxides include tri-n-octylphosphine (TOPO). Examples of the hydroxime include 7-hydroxy-5,8-diethyl-6-dodecanone oxime (LIX-63), 5-dodecyl-2-hydroxybenzaldehyde oxime (LIX 860), 2-hydroxy-5-nonylbenzophenone oxime (LIX 65N), 2-hydroxy-5-nonylacetophenone oxime (SME 529), and 2-hydroxy-5-nonylphenyl benzyl ketone oxime (Acorga P-17). Examples of the organic amine compound include Primene (R) JM-T manufactured by The Dow Chemical Company, which is a primary amine, Amberlite (R) LA-2 manufactured by Sigma-Aldrich Co. LLC, which is a secondary amine, Alamine 336 (trioctylamine) manufactured by Sigma-Aldrich Co. LLC, which is a tertiary amine, and Aliquat (R) 336 manufactured by Sigma-Aldrich Co. LLC, which is a quaternary ammonium salt.

In the lithium recovery method 9 of the present invention (FIG. 2), for the acid solution, next, lithium hydroxide (LiOH) is added in STEP 2, thereby neutralizing the mineral acid. The acid solution after the neutralization is next subjected to solvent extraction in STEP 3. In the solvent extraction, manganese, cobalt, and nickel, excluding lithium, out of the valuable metals, are separately solvent extracted, or iron and aluminum are separated and removed as their respective metal sulfate aqueous solutions 2, thereby obtaining a first lithium salt aqueous solution. In the case where hydrochloric acid is used for the acid dissolution in STEP 1, the lithium salt contained in the first lithium salt aqueous solution is lithium chloride. In the extraction step, an alkali-containing organic solvent obtained by mixing an alkali aqueous solution and the organic solvent, followed by oil-water separation, is mixed with the acid solution.

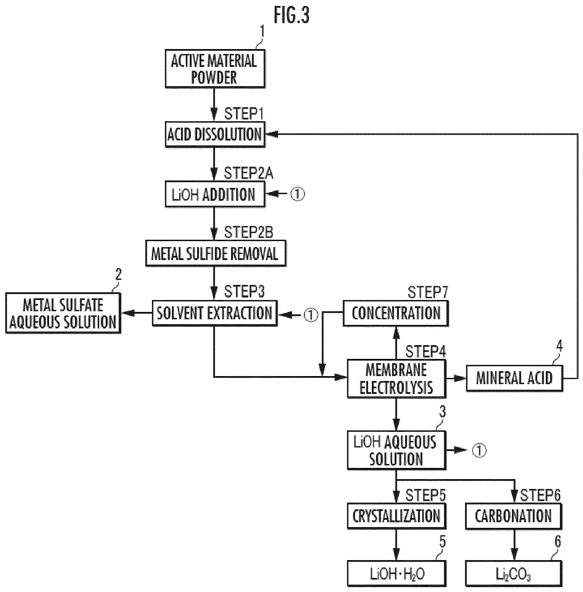

In the lithium recovery method 10 of the present invention (FIG. 3), for the acid solution, next, lithium hydroxide (LiOH) is added in STEP 2A, thereby neutralizing the mineral acid. The acid solution after the neutralization is next mixed with a sulfide in STEP 2B in the pH range of 2 to 6 to produce a sulfide of at least one metal selected from the group consisting of copper, cadmium, lead, and mercury, and the metal sulfide is removed. Examples of the sulfide to be mixed with the acid solution include hydrogen sulfide gas, sodium hydrosulfide, and sodium sulfide.

The acid solution from which the metal sulfide has been removed is subjected to solvent extraction in STEP 3. In the solvent extraction, manganese, cobalt, and nickel, excluding lithium, out of the valuable metals, are separately solvent extracted, or iron and aluminum are separated and removed as their respective metal sulfate aqueous solutions 2, thereby obtaining a first lithium salt aqueous solution. In the case where hydrochloric acid is used for the acid dissolution in STEP 1, the lithium salt contained in the first lithium salt aqueous solution is lithium chloride.

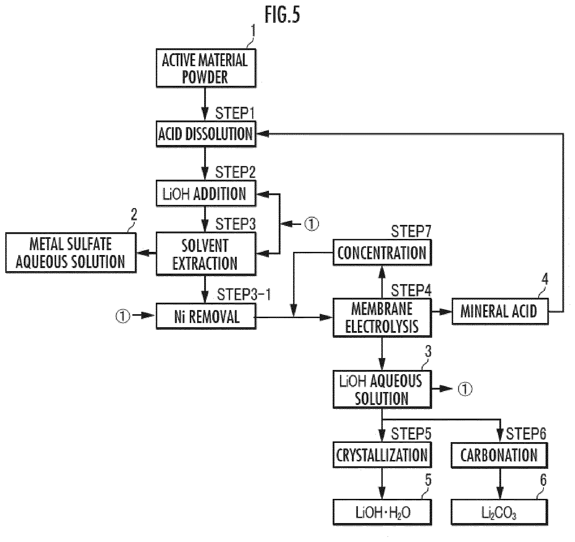

In the lithium recovery method 12 of the present invention (FIG. 5), for the acid solution, next, lithium hydroxide (LiOH) is added in STEP 2, thereby neutralizing the mineral acid. The acid solution after the neutralization is next subjected to solvent extraction in STEP 3. In the solvent extraction, manganese, cobalt, and nickel, excluding lithium, out of the valuable metals, are separately solvent extracted, or iron and aluminum are separated and removed as their respective metal sulfate aqueous solutions 2, thereby obtaining a first lithium salt aqueous solution.

The first lithium salt aqueous solution and an alkali are mixed, the pH of the aqueous solution is preferably adjusted to 8 to 14, more preferably 10 to 12, and a minute amount of nickel contained in the first lithium salt aqueous solution is removed as nickel hydroxide to obtain a second lithium salt aqueous solution. The alkali to be mixed with the first lithium salt aqueous solution preferably includes at least one selected from the group consisting of lithium, sodium, potassium, rubidium, cesium, and francium, more preferably includes at least one selected from the group consisting of lithium, sodium, and potassium, is still more preferably at least one selected from the group consisting of lithium, sodium, and potassium, and is particularly preferably lithium. The alkali may be a solid or may be an aqueous solution. Nickel hydroxide is separated from the second lithium salt aqueous solution by a solid-liquid separation step such as filtration. In the solid-liquid separation step for nickel hydroxide, a flocculating agent may be used. In the case where hydrochloric acid is used for the acid dissolution in STEP 1, the lithium salt contained in the second lithium salt aqueous solution is lithium chloride. In the lithium recovery method 12 of the present invention, a minute amount of nickel contained in the first lithium salt aqueous solution is removed as nickel hydroxide, and thus nickel is not accumulated.

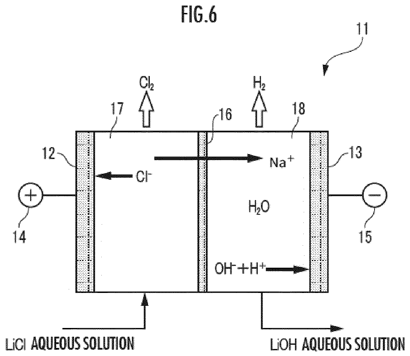

In the recovery methods of the present embodiments 1 to 12, next, the second lithium salt aqueous solution is subjected to membrane electrolysis using an ion exchange membrane in STEP 4. The membrane electrolysis in STEP 4 can be carried out using, for example, an electrolytic bath 11 shown in FIG. 6.

The electrolytic bath 11 comprises an anode plate 12 on one inner side and a cathode plate 13 on the inner side opposite to the anode plate 12, and the anode plate 12 is connected to an anode 14 of the power source and the cathode plate 13 is connected to a cathode 15 of the power source. In addition, the electrolytic bath 11 is compartmentalized by an ion exchange membrane 16 into an anode chamber 17 comprising the anode plate 12 and a cathode chamber 18 comprising the cathode plate 13.

In the electrolytic bath 11, when lithium chloride, for example, is supplied as the second lithium salt aqueous solution to the anode chamber 17 to carry out electrolysis, chloride ions produce chlorine gas (Cl₂) on the anode plate 12, while lithium ions move through the ion exchange membrane 16 to the cathode chamber 18.

In the cathode chamber 18, water (H₂O) is ionized into hydroxide ions (OH⁻) and hydrogen ions (H⁺), and hydrogen ions produce hydrogen gas (H₂) on the cathode plate 13, while hydroxide ions are combined with lithium to produce a lithium hydroxide aqueous solution 3.

Electric power to be used for the membrane electrolysis step preferably includes electric power obtained by renewable energy, and more preferably includes electric power obtained by at least one selected from the group consisting of solar power generation and wind power generation.

In the present embodiments 1 to 12, by allowing the hydrogen gas (H₂) and chlorine gas (Cl₂) produced by the membrane electrolysis to react with each other, hydrochloric acid as a mineral acid 4 can be obtained, and the mineral acid 4 can be used for dissolution of the active material powder 1 in STEP 1.

The lithium hydroxide aqueous solution 3 obtained by the membrane electrolysis can be recovered as lithium hydroxide monohydrate (LiOH·H₂O) by crystallization in STEP 5, or can be recovered as lithium carbonate (Li₂CO₃) by carbonation in STEP 6. The carbonation can be carried out by allowing the lithium hydroxide aqueous solution 3 to react with carbon dioxide gas (CO₂).

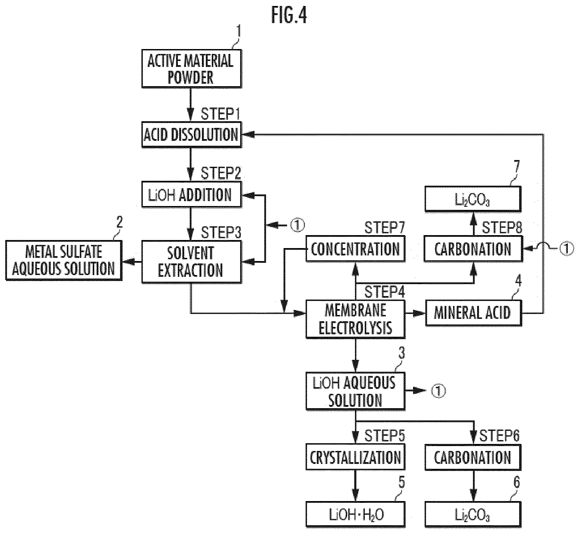

In the lithium recovery method 11 of the present invention (FIG. 4), at least one of a portion of the lithium hydroxide aqueous solution 3 obtained by the membrane electrolysis and a portion of the second lithium salt aqueous solution containing at least one selected from the group consisting of sodium ions and sulfate ions is carbonated in STEP 8, and lithium carbonate 7 is separated by a solid-liquid separation step such as filtration. The filtrate separated from the lithium carbonate 7 is discarded. Accordingly, in the lithium recovery method 11 of the present invention, the impurities contained in the lithium hydroxide aqueous solution 3 and the impurities such as at least one type of ions selected from the group consisting of sodium ions and sulfate ions contained in the second lithium salt aqueous solution are not accumulated and are reduced.

In the case where the lithium hydroxide aqueous solution 3 is used for the solvent extraction in STEP 3, the lithium hydroxide aqueous solution 3 is added to an extraction solvent. Since the extraction solvent used for the solvent extraction in STEP 3 is a cation exchange extractant, if it is used continuously, the liquid nature will lean toward the acidic side and the extraction rate will be decreased, but addition of the lithium hydroxide aqueous solution 3 can suppress the decrease in the extraction rate.

In addition, in the case where the lithium hydroxide aqueous solution 3 is used for the solvent extraction in STEP 3, the lithium hydroxide aqueous solution 3 can be used for the solvent extraction of at least one of manganese, cobalt, and nickel, each of which is separately solvent extracted.

In addition, in the membrane electrolysis, the first lithium salt aqueous solution is electrolyzed, resulting in production of a third lithium salt aqueous solution that is more dilute than the second lithium salt aqueous solution. Then, in the present embodiment, the third lithium salt aqueous solution is concentrated in STEP 7 and added to the first lithium salt aqueous solution. The concentration in STEP 7 can be carried out using, for example, a reverse osmosis membrane (RO membrane).

In the present embodiments 1 to 12, a lithium salt aqueous solution of high concentration can be obtained since no alkali source other than lithium is supplied. In addition, in the present embodiments 1 to 12, since lithium hydroxide can be obtained by electrolyzing the lithium salt aqueous solution of high concentration, the recovery rate of lithium can be improved. Furthermore, in the present embodiments 1 to 12, since there is no unnecessary alkali source but lithium, lithium hydroxide obtained by the electrolysis can be returned to the steps as it is, thus enabling resource circulation.

### Reference Signs List

1 Active material powder
2 Metal sulfate aqueous solution
3 Lithium hydroxide aqueous solution
4 Mineral acid
11 Electrolytic bath
16 Ion exchange membrane

## Claims

1. A method for recovering lithium from waste lithium ion batteries, the method comprising:
a dissolution step of dissolving active material powder obtained by pre-processing the waste lithium ion batteries in a mineral acid to obtain a solution;
a neutralization step of neutralizing the solution with lithium hydroxide;
a lithium hydroxide re-addition step of re-adding lithium hydroxide to the acid solution to which lithium hydroxide has been added and filtering precipitates to obtain a first lithium salt aqueous solution as a filtrate; and
a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution,
wherein the lithium hydroxide aqueous solution obtained in the membrane electrolysis step is reused in at least one selected from a group consisting of the neutralization step and the lithium hydroxide re-addition step, and
the acid obtained in the membrane electrolysis step is reused as the mineral acid used in the dissolution step.

2. A method for recovering lithium from waste lithium ion batteries, the method comprising:
a dissolution step of dissolving active material powder obtained by pre-processing the waste lithium ion batteries in a mineral acid to obtain a solution;
a neutralization and solid-liquid separation step of solid-liquid separating the solution into insoluble matters and a solution A produced by neutralization with lithium hydroxide;
a manganese extraction step of adding an organophosphorus compound extraction solvent to the solution A to extract and separate manganese and also to obtain a solution B;
a cobalt extraction step of adding an organophosphorus compound extraction solvent to the solution B to extract and separate cobalt and also to obtain a solution C;
a nickel extraction step of adding an organophosphorus compound extraction solvent to the solution C to extract and separate nickel and also to obtain a first lithium salt aqueous solution; and
a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution,
wherein the lithium hydroxide aqueous solution obtained in the membrane electrolysis step is reused in at least one selected from a group consisting of the neutralization and solid-liquid separation step, the manganese extraction step, the cobalt extraction step, and the nickel extraction step, and
the acid obtained in the membrane electrolysis step is reused as the mineral acid used in the dissolution step.

3. A method for recovering lithium from waste lithium ion batteries, the method comprising:
a dissolution step of dissolving active material powder obtained by pre-processing the waste lithium ion batteries in a mineral acid to obtain a solution;
a neutralization and solid-liquid separation step of solid-liquid separating the solution into insoluble matters and a solution A produced by neutralization with lithium hydroxide;
a manganese extraction step of adding an organophosphorus compound extraction solvent to the solution A to extract and separate manganese and also to obtain a solution D;
a nickel extraction step of adding a hydroxime extraction solvent to the solution D to extract and separate nickel and also to obtain a solution E;
a cobalt extraction step of adding an organophosphorus compound extraction solvent to the solution E to extract and separate cobalt and also to obtain a first lithium salt aqueous solution; and
a membrane electrolysis step of subjecting the first lithium salt aqueous solution to electrolysis using an ion exchange membrane to obtain a lithium hydroxide aqueous solution, an acid, and a second lithium salt aqueous solution that is more dilute than the first lithium salt aqueous solution,
wherein the lithium hydroxide aqueous solution obtained in the membrane electrolysis step is reused in at least one selected from a group consisting of the neutralization and solid-liquid separation step, the manganese extraction step, the nickel extraction step, and the cobalt extraction step, and
the acid obtained in the membrane electrolysis step is reused as the mineral acid used in the dissolution step.

4. A method for recovering lithium from waste lithium ion batteries, the method comprising:
a dissolution step of dissolving active material powder obtained by pre-processing the waste lithium ion batteries in a mineral acid to obtain a solution;
a neutralization and solid-liquid separation step of solid-liquid separating the solution into insoluble matters and a solution A produced by neutralization with lithium hydroxide;
a cobalt extraction step of adding an organic amine compound extraction solvent to the solution A to extract and separate cobalt and also to obtain a solution F;
a manganese extraction step of adding an organophosphorus compound extraction solvent to the solution F to extract and separate manganese and also to obtain a solution G;
a nickel extraction step of adding an organophosphorus compound extraction solvent to the solution G to extract and separate nickel and also to obtain a first lithium salt aqueous solution; and
a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution,
wherein the lithium hydroxide aqueous solution obtained in the membrane electrolysis step is reused in at least one selected from a group consisting of the neutralization and solid-liquid separation step, the cobalt extraction step, the manganese extraction step, and the nickel extraction step, and
the acid obtained in the membrane electrolysis step is reused as the mineral acid used in the dissolution step.

5. A method for recovering lithium from waste lithium ion batteries, the method comprising:
a dissolution step of dissolving active material powder obtained by pre-processing the waste lithium ion batteries in a mineral acid to obtain a solution;
a neutralization and solid-liquid separation step of solid-liquid separating the solution into insoluble matters and a solution A produced by neutralization with lithium hydroxide;
a cobalt extraction step of adding an organic amine compound extraction solvent to the solution A to extract and separate cobalt and also to obtain a solution H;
a nickel extraction step of adding a hydroxime extraction solvent to the solution H to extract and separate nickel and also to obtain a solution I;
a manganese extraction step of adding an organophosphorus compound extraction solvent to the solution I to extract and separate manganese and also to obtain a first lithium salt aqueous solution; and
a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution,
wherein the lithium hydroxide aqueous solution obtained in the membrane electrolysis step is reused in at least one selected from a group consisting of the neutralization and solid-liquid separation step, the cobalt extraction step, the nickel extraction step, and the manganese extraction step, and
the acid obtained in the membrane electrolysis step is reused as the mineral acid used in the dissolution step.

6. A method for recovering lithium from waste lithium ion batteries, the method comprising:
a dissolution step of dissolving active material powder obtained by pre-processing the waste lithium ion batteries in a mineral acid to obtain a solution;
a neutralization and solid-liquid separation step of solid-liquid separating the solution into insoluble matters and a solution A produced by neutralization with lithium hydroxide;
a nickel extraction step of adding a hydroxime extraction solvent to the solution A to extract and separate nickel and also to obtain a solution J;
a manganese extraction step of adding an organophosphorus compound extraction solvent to the solution J to extract and separate manganese and also to obtain a solution K;
a cobalt extraction step of adding an organophosphorus compound extraction solvent to the solution K to extract and separate cobalt and also to obtain a first lithium salt aqueous solution; and
a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution,
wherein the lithium hydroxide aqueous solution obtained in the membrane electrolysis step is reused in at least one selected from a group consisting of the neutralization and solid-liquid separation step, the nickel extraction step, the manganese extraction step, and the cobalt extraction step, and
the acid obtained in the membrane electrolysis step is reused as the mineral acid used in the dissolution step.

7. A method for recovering lithium from waste lithium ion batteries, the method comprising:
a dissolution step of dissolving active material powder obtained by pre-processing the waste lithium ion batteries in a mineral acid to obtain a solution;
a neutralization and solid-liquid separation step of solid-liquid separating the solution into insoluble matters and a solution A produced by neutralization with lithium hydroxide;
a nickel extraction step of adding a hydroxime extraction solvent to the solution A to extract and separate nickel and also to obtain a solution L;
a cobalt extraction step of adding an organic amine compound extraction solvent to the solution L to extract and separate cobalt and also to obtain a solution M;
a manganese extraction step of adding an organophosphorus compound extraction solvent to the solution M to extract and separate manganese and also to obtain a first lithium salt aqueous solution; and
a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution,
wherein the lithium hydroxide aqueous solution obtained in the membrane electrolysis step is reused in at least one selected from a group consisting of the neutralization and solid-liquid separation step, the nickel extraction step, the cobalt extraction step, and the manganese extraction step, and
the acid obtained in the membrane electrolysis step is reused as the mineral acid used in the dissolution step.

8. A method for recovering lithium from waste lithium ion batteries, the method comprising:
a dissolution step of dissolving active material powder obtained by pre-processing the waste lithium ion batteries in a mineral acid to obtain a solution;
a neutralization step of neutralizing the solution with lithium hydroxide;
a solvent extraction step of separating at least one metal excluding lithium, out of metals contained in the active material powder, from the acid solution to which lithium hydroxide has been added by organic solvent extraction to obtain a first lithium salt aqueous solution as a residual liquid of the solvent extraction; and
a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution,
wherein the lithium hydroxide aqueous solution obtained in the membrane electrolysis step is reused in at least one selected from a group consisting of the neutralization step and the solvent extraction step,
the acid obtained in the membrane electrolysis step is reused as the mineral acid used in the dissolution step, and
the organic solvent is at least one selected from a group consisting of an organophosphorus compound, a hydroxime, and an organic amine compound.

9. A method for recovering lithium from waste lithium ion batteries, the method comprising:
a dissolution step of dissolving active material powder obtained by pre-processing the waste lithium ion batteries in a mineral acid to obtain a solution;
a neutralization step of neutralizing the solution with lithium hydroxide;
a solvent extraction step of separating at least one metal excluding lithium, out of metals contained in the active material powder, from the acid solution to which lithium hydroxide has been added by solvent extraction to obtain a first lithium salt aqueous solution as a residual liquid of the solvent extraction; and
a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution,
wherein the lithium hydroxide aqueous solution obtained in the membrane electrolysis step is reused in at least one selected from a group consisting of the neutralization step and the solvent extraction step,
the acid obtained in the membrane electrolysis step is reused as the mineral acid used in the dissolution step, and
in the solvent extraction step, an alkali-containing organic solvent obtained by mixing an alkali aqueous solution and the organic solvent, followed by oil-water separation, is mixed with the acid solution.

10. A method for recovering lithium from waste lithium ion batteries, the method comprising:
a dissolution step of dissolving active material powder obtained by pre-processing the waste lithium ion batteries in a mineral acid to obtain a solution;
a neutralization step of neutralizing the solution with lithium hydroxide;
a metal sulfide removal step of mixing the acid solution to which lithium hydroxide has been added with a sulfide in a pH range of 2 to 6 to produce a sulfide of at least one metal selected from a group consisting of copper, cadmium, lead, and mercury, and removing the metal sulfide;
a solvent extraction step of separating at least one metal excluding lithium, out of metals contained in the active material powder, from the acid solution from which the metal sulfide has been removed by solvent extraction to obtain a first lithium salt aqueous solution as a residual liquid of the solvent extraction; and
a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution,
wherein the lithium hydroxide aqueous solution obtained in the membrane electrolysis step is reused in at least one selected from a group consisting of the neutralization step and the solvent extraction step, and
the acid obtained in the membrane electrolysis step is reused as the mineral acid used in the dissolution step.

11. A method for recovering lithium from waste lithium ion batteries, the method comprising:
a dissolution step of dissolving active material powder obtained by pre-processing the waste lithium ion batteries in a mineral acid to obtain a solution;
a neutralization step of neutralizing the solution with lithium hydroxide;
a solvent extraction step of separating at least one metal excluding lithium, out of metals contained in the active material powder, from the acid solution to which lithium hydroxide has been added by solvent extraction to obtain a first lithium salt aqueous solution as a residual liquid of the solvent extraction;
a membrane electrolysis step of subjecting the first lithium salt aqueous solution to membrane electrolysis using an ion exchange membrane to obtain a lithium hydroxide aqueous solution, an acid, and a second lithium salt aqueous solution that is more dilute than the first lithium salt aqueous solution; and
a carbonation step of carbonating the lithium hydroxide aqueous solution and the second lithium salt aqueous solution,
wherein the lithium hydroxide aqueous solution obtained in the membrane electrolysis step is reused in at least one selected from a group consisting of the neutralization step and the solvent extraction step, and
the acid obtained in the membrane electrolysis step is reused as the mineral acid used in the dissolution step.

12. A method for recovering lithium from waste lithium ion batteries, the method comprising:
a dissolution step of dissolving active material powder obtained by pre-processing the waste lithium ion batteries in a mineral acid to obtain a solution;
a neutralization step of neutralizing the solution with lithium hydroxide;
a solvent extraction step of separating at least one metal excluding lithium, out of metals contained in the active material powder, from the acid solution to which lithium hydroxide has been added by solvent extraction to obtain a first lithium salt aqueous solution as a residual liquid of the solvent extraction;
a nickel removal step of mixing the first lithium salt aqueous solution and an alkali to remove nickel contained in the first lithium salt aqueous solution and to obtain a second lithium salt aqueous solution; and
a membrane electrolysis step of subjecting the second lithium salt aqueous solution to membrane electrolysis using an ion exchange membrane to obtain a lithium hydroxide aqueous solution, an acid, and a third lithium salt aqueous solution that is more dilute than the second lithium salt aqueous solution,
wherein the lithium hydroxide aqueous solution obtained in the membrane electrolysis step is reused in at least one selected from a group consisting of the neutralization step and the solvent extraction step, and
the acid obtained in the membrane electrolysis step is reused as the mineral acid used in the dissolution step.

13. The method for recovering lithium from waste lithium ion batteries according to any one of claims 1 to 12, wherein the second lithium salt aqueous solution or the third lithium salt aqueous solution is concentrated and added to the first lithium salt aqueous solution or the second lithium salt aqueous solution.

14. The method for recovering lithium from waste lithium ion batteries according to any one of claims 1 to 12, wherein the mineral acid includes at least one selected from a group consisting of hydrochloric acid, sulfuric acid, and nitric acid.

15. The method for recovering lithium from waste lithium ion batteries according to any one of claims 1 to 12, wherein the mineral acid includes hydrochloric acid.

16. The method for recovering lithium from waste lithium ion batteries according to any one of claims 1 to 12, wherein hydrochloric acid produced by allowing chlorine and hydrogen obtained in the membrane electrolysis step to react with each other is used as the mineral acid.

17. The method for recovering lithium from waste lithium ion batteries according to any one of claims 1 to 12, wherein electric power used for the membrane electrolysis step includes electric power obtained by renewable energy.

18. The method for recovering lithium from waste lithium ion batteries according to claim 17, wherein the electric power obtained by renewable energy includes electric power obtained by at least one selected from a group consisting of solar power generation and wind power generation.
